# EUROPEAN PATENT APPLICATION

(11) **EP 4 080 189 A1**
(43) Date of publication of application: **26.10.2022**
(21) Application number: 20868465.4
(22) Date of filing: 23.09.2020
(51) Int. Cl.: G01N 15/06

(54) **PARTICULATE MATTER SENSOR AND VEHICLE AIR CONDITIONER ASSEMBLY**

(30) Priority: 24.09.2019 CN 201910903346
(71) Applicant: Valeo Automotive Air Conditioning Hubei Co., Ltd., Jingzhou, Hubei 434007 (CN)
(72) Inventor: GE, Zhongdong, Jingzhou, Hubei 434007 (CN); BAO, Tao, Jingzhou, Hubei 434007 (CN)
(74) Representative: Valeo Systèmes Thermiques
(86) International application number: PCT/CN2020/117143
(87) International publication number: WO 2021/057792

(57) **Abstract**

Disclosed are a particulate matter sensor (900) for detecting particulate matter in the air and a vehicle air conditioner assembly provided with the particulate matter sensor (900). The particulate matter sensor (900) comprises a light source (1), wherein the light source (1) is used for emitting a beam; and the particulate matter sensor (900) further comprises a light-splitting assembly (3) for splitting the beam into at least a first sub-beam (L1) and a second sub-beam (L2), and photoreceptors (4, 5) for detecting the first sub-beam (L1) and the second sub-beam (L2), which irradiate the air. The beam emitted by the light source (1) can be divided into at least two sub-beams (L1, L2) by means of the light-splitting assembly (3), and the two sub-beams (L1, L2) can irradiate the air at different positions so as to detect the particulate matter in the air at different positions, thereby reducing the detection cost. The vehicle air conditioner assembly comprises the particulate matter sensor (900), and thus also has the advantage of low cost.

## Description

### Technical field

The present invention relates to the detection of particulates in air, in particular to a particulate sensor for detecting particulates in air and a motor vehicle air conditioning assembly fitted with the particulate sensor.

### Background art

As society develops, people are becoming more and more demanding with regard to the quality of their living environment, and the concentration of particulates in air is attracting more and more attention. To characterize particulates in air, measurement indices such as PM2.5 and PM10 have appeared in response to the times; of these, PM2.5 are also called fine particulates, and are specifically particulates in ambient air with a particle size smaller than or equal to 2.5 microns. They can remain suspended in air for a long time, and the higher the concentration thereof in air, the more serious the air pollution is. PM10 are also called inhalable particulates, and are specifically particulates with a particle size of 10 microns or less. Inhalable particulates remain in ambient air for a very long time, and have considerable effects on human health and atmospheric visibility.

There are two technical approaches in the prior art for measuring particulates: the weight analysis technique and the optical technique. The weight analysis technique comprises gathering particles on a filter, and then performing quantification by direct or indirect weighing. The optical technique relies on shining a light beam onto an airflow containing particulates, so that the light beam changes, e.g. is scattered, and then detecting the extent to which the light beam has changed by means of a light sensor, so as to characterize the particle size and concentration of the particulates. WO2018211044A1 has disclosed a particulate sensor which uses the optical technique to detect particulates in air.

A particulate sensor which uses the optical technique to detect particulates in air generally comprises an airflow channel, a light source and a light sensor, wherein the airflow channel allows an airflow containing particulates to flow therein; the light source is used to produce a light beam, which shines onto the airflow in the airflow channel and changes under the action of particulates in the airflow; and the light sensor is used to detect the changed light beam, and generate a pulse signal according to the extent to which the light beam has changed, so as to characterize the particle size and concentration of the particulates.

Due to structural limitations, the particulate sensor in the prior art can only detect particulates at one position in air; for particulates at different positions in air, multiple particulate sensors are generally needed to perform detection separately, and this increases the cost of detection.

### Summary of the invention

An object of the present invention is to provide a particulate sensor which is capable of detecting particulates at different positions in air and thus reduces the cost of detection.

Another object of the present invention is to provide a motor vehicle air conditioning assembly comprising the particulate sensor.

A particulate sensor for achieving the abovementioned object is used for detecting particulates in air and comprises a light source, the light source being used to emit a light beam; the particulate sensor further comprises: a light splitting component, for splitting the light beam into at least a first secondary light beam and a second secondary light beam; a light sensor, for detecting the first secondary light beam and the second secondary light beam shining onto the air.

In one embodiment, the particulate sensor further comprises an airflow channel, the airflow channel being configured to allow the air to pass through to form an airflow; the light sensor is used to detect the first secondary light beam and the second secondary light beam shining onto the airflow.

In one embodiment, the airflow channel at least comprises a first airflow channel and a second airflow channel; the first airflow channel is configured to allow the air to pass through to form a first airflow; the second airflow channel is configured to allow the air to pass through to form a second airflow; the light sensor is used to detect the first secondary light beam and the second secondary light beam shining onto the first airflow and the second airflow respectively.

In one embodiment, the light sensor at least comprises a first light sensor and a second light sensor; the first light sensor is used to detect the first secondary light beam shining onto the first airflow, and the second light sensor is used to detect the second secondary light beam shining onto the second airflow.

In one embodiment, the light splitting component comprises one or more beam splitter.

In one embodiment, the light splitting component comprises a fibre optic beam splitter.

In one embodiment, the particulate sensor further comprises a duct member; the duct member has a first tributary part, a confluence part and a second tributary part, the confluence part being connected separately to the first tributary part and the second tributary part, wherein the first tributary part defines the first airflow channel, the second tributary part defines the second airflow channel, and the confluence part has a confluence cavity; the confluence cavity is in communication separately with the first airflow channel and the second airflow channel; the confluence cavity is used to bring together the first airflow in the first airflow channel and the second airflow in the second airflow channel.

In one embodiment, the particulate sensor further comprises a fan, the fan being used to suck gas from inside the confluence cavity, in order to produce negative pressure in the confluence cavity, so that the first airflow and the second airflow flow toward the interior of the confluence cavity and come together in the confluence cavity.

In one embodiment, the first light sensor is disposed in the first airflow channel, and the second light sensor is disposed in the second airflow channel; the first tributary part has a first opening, and the second tributary part has a second opening; the first opening allows the first secondary light beam to pass through, and the second opening allows the second secondary light beam to pass through.

In one embodiment, the particulate sensor further comprises a mounting plate, the mounting plate having a through-hole; the duct member is fixed to the mounting plate and located on one side of the mounting plate, wherein the confluence cavity is in communication with the through-hole; the fan is fixed to the mounting plate and located on the other side of the mounting plate, wherein an air inlet of the fan is in communication with the through-hole; and the through-hole allows gas in the confluence cavity to pass through to enter the fan.

In one embodiment, the light source, the light splitting component, the first light sensor and the second light sensor are each fixed to the mounting plate, and located on the same side of the mounting plate as the duct member.

In one embodiment, the particulate sensor further comprises a housing; the housing has a first air inlet, a second air inlet and an air outlet; the mounting plate is fixed to the housing and located inside the housing, the first air inlet allows the first airflow to enter the first airflow channel, and the second air inlet allows the second airflow to enter the second airflow channel.

A motor vehicle air conditioning assembly for achieving the abovementioned object comprises the particulate sensor as described above.

The present invention has the following positive and progressive effects: the particulate sensor provided in the present invention comprises the light splitting component, the light beam emitted by the light source can be split into at least two secondary light beams by the light splitting component, and the two secondary light beams can shine onto different positions in air, so as to detect particulates at different positions in air, thus reducing the cost of detection. The motor vehicle air conditioning assembly provided in the present invention comprises the particulate sensor, and therefore also has the advantage of a low cost.

### Brief description of the drawings

To provide a clearer explanation of the technical solution of the embodiments of the present disclosure, the drawings of embodiments are briefly described below. Obviously, the drawings in the description below merely relate to some embodiments of the present disclosure, without limiting it.

The above and other features, properties and advantages of the present invention will become more obvious through the following description which refers to the drawings and embodiments, wherein:
Fig. 1 is a schematic drawing of a particulate sensor, showing a first airflow channel;
Fig. 2 is a schematic drawing of the particulate sensor, showing a second airflow channel;
Fig. 3 is a schematic drawing of the particulate sensor, showing an air outlet.
Fig. 4 is a top view of the internal structure of the particulate sensor, showing one side of a mounting plate.
Fig. 5 is a schematic drawing of the internal structure of the particulate sensor, showing a first opening and a second opening.
Fig. 6 is a schematic drawing of the internal structure of the particulate sensor, showing another side of the mounting plate.
Fig. 7 is a schematic drawing of the internal structure of the particulate sensor with a fan removed, showing one side of the mounting plate.
Fig. 8 is a schematic drawing of the internal structure of the particulate sensor with the fan removed, showing the other side of the mounting plate.
Fig. 9 is a schematic drawing of a housing of the particulate sensor, showing a first air inlet.
Fig. 10 is a schematic drawing of a housing of the particulate sensor, showing a second air inlet.
Fig. 11 is a light path diagram of the particulate sensor, wherein a light splitting component comprises two beam splitters.
Fig. 12 is a light path diagram of a fibre optic beam splitter.

### Detailed description of embodiments

Multiple different embodiments or examples of the technical solution of the implemented subject matter are disclosed below. To simplify the disclosed content, specific real examples of each element and arrangement are described below, but these are of course merely examples, which do not limit the scope of protection of the present invention. For instance, distribution of a first feature at a second feature, as recorded subsequently herein, may comprise an embodiment in which the first and second features are distributed by direct connection, and may also comprise an embodiment in which an additional feature is formed between the first and second features, such that the first and second features may not be directly connected. In addition, in this content, reference labels and/or letters might be repeated in different examples. Such repetition is for conciseness and clarity, and does not in itself indicate a relationship between the embodiments and/or structures under discussion. Furthermore, when a first element is described as being connected or combined with a second element, such a description includes an embodiment in which the first and second elements are directly connected or combined with each other, and also includes using the addition of one or more other intervening element to cause the first and second elements to be indirectly connected or combined with each other.

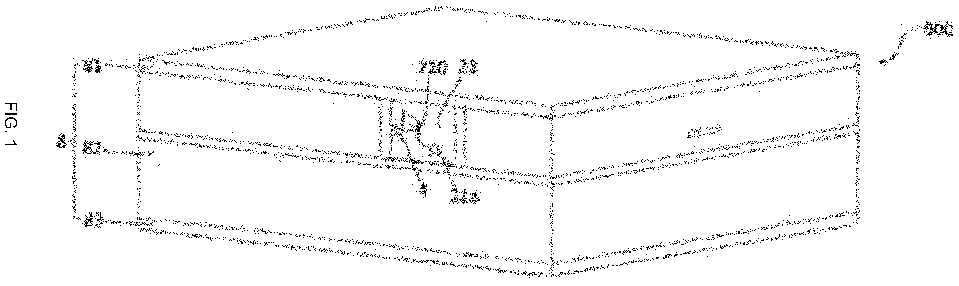

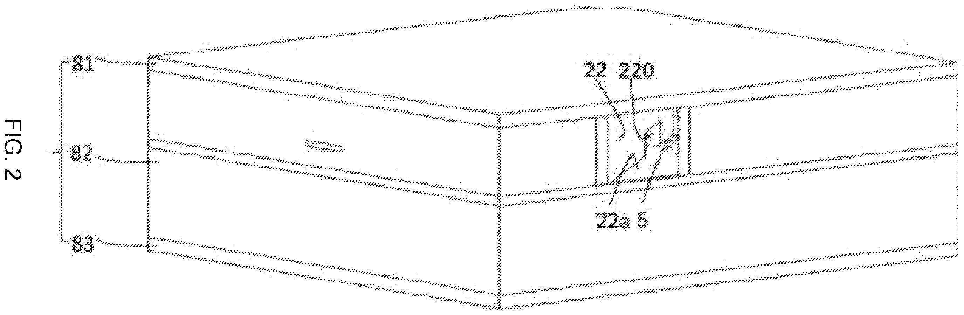

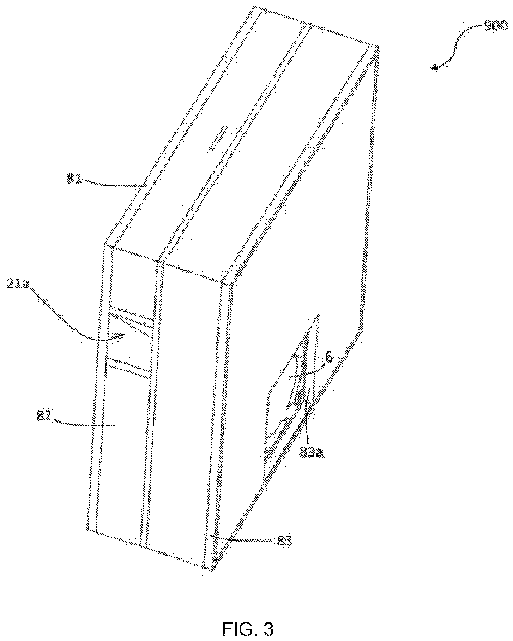

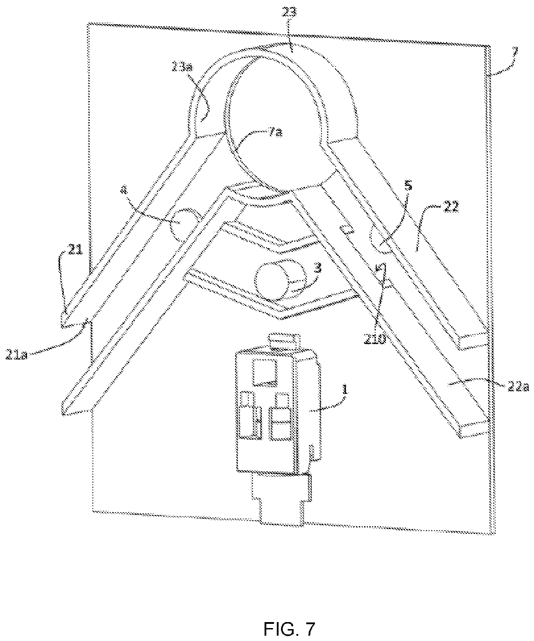

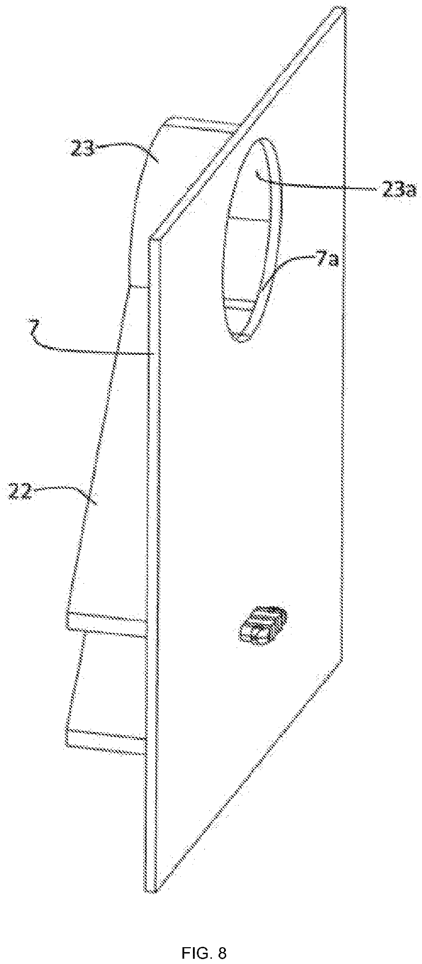

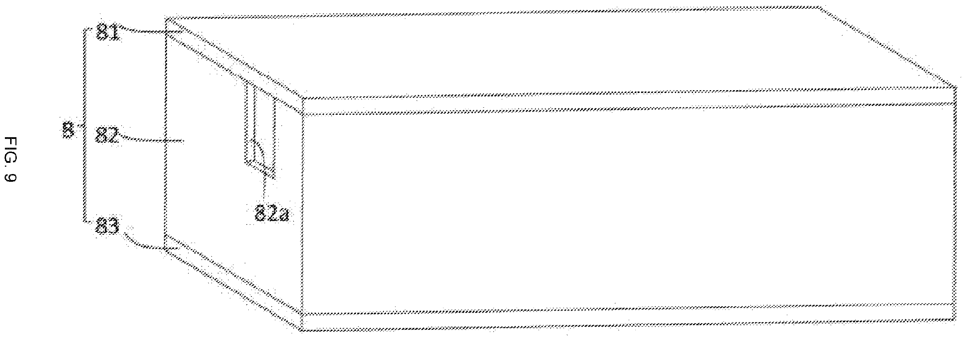

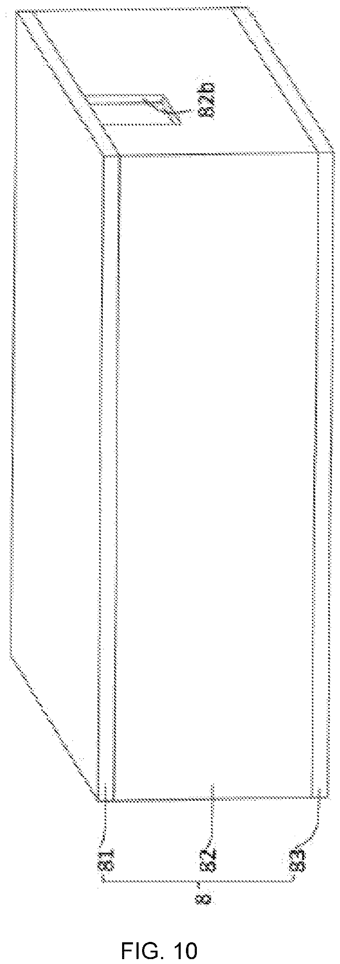

It must be noted that Figs. 1 - 12 are all merely examples, and are not drawn with equal scales, and this should not be taken to be a limitation of the scope of protection actually claimed by the present invention.

A motor vehicle air conditioning assembly comprises structures including a casing, a fan, an evaporator and a warm air heat exchanger. The evaporator and the warm air heat exchanger are both arranged in an air duct inside the casing, and the fan is used to cause an airflow to enter the air duct inside the casing and flow through the evaporator or the warm air heat exchanger, so that the airflow is cooled or heated. Under the action of the fan, these cooled or heated airflows are conveyed into the vehicle cabin, to provide people in the vehicle cabin with a more comfortable environment.

Apart from control of ambient temperature and humidity, a comfortable environment requires control of particulates in air. Thus, the motor vehicle air conditioning assembly further comprises a particulate sensor 900 for detecting particulates in air. Specifically, an airflow may be caused to flow through the particulate sensor 900, to detect the particle size and concentration of particulates in the airflow. In an embodiment of the present invention, the particulate sensor 900 is a sensor which measures the particle size and concentration of particulates by the optical technique.

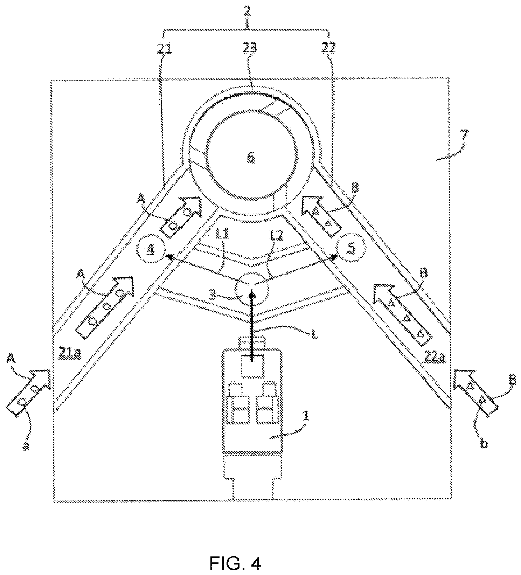

As shown in Fig. 4, in one embodiment, the particulate sensor 900 comprises a light source 1, which light source 1 may be a laser light source or an infrared light source, wherein the laser light source may be a laser diode which, in an energized state, can emit a laser light beam, while the infrared light source can emit an infrared light beam. Taking a laser light beam as an example, when the laser light beam shines onto particulates in an airflow, the laser light beam will change, e.g. will be scattered, wherein the extent to which it changes is related to the particle size and concentration of the particulates. By detecting the extent to which the laser light beam changes, it is possible to obtain the corresponding particulate particle size and concentration.

For a more detailed explanation of the principle of measuring the particle size and concentration of particulates through light scattering, the following document may be referred to:
GAO Bo. Dust sensor based on light scattering measurement method and applications thereof [A]. China Household Electrical Appliances Association. Collection Of Papers From 2013 China Household Electrical Appliances Technical Conference [C]. China Household Electrical Appliances: "China Appliance" Magazine, 2013: 5.

The abovementioned document also records the working principle, system composition and characteristic parameters of the SM-PWM-01A dust sensor from General Electric, and may be used for reference by those skilled in the art when implementing embodiments of the present invention.

Besides being used in a motor vehicle air conditioning assembly to detect particulates in motor vehicle cabin air, the particulate sensor 900 provided in embodiments of the present invention may also be used to detect particulates in other environments, e.g. building environments. Besides being used to detect particulates in an airflow, the particulate sensor 900 provided in embodiments of the present invention may also be used to detect particulates in stationary air.

Due to structural limitations, a conventional particulate sensor can only detect particulates at one position in air; for particulates at different positions in air, multiple particulate sensors are generally needed to perform detection separately, and this increases the cost of detection.

In order to detect particulates at different positions in air, in one embodiment of the present invention, the particulate sensor 900 comprises a light source 1, a light splitting component 3 and a light sensor, wherein the light source 1 is used to emit a light beam L; the light splitting component 3 is used to split the light beam L into at least a first secondary light beam L1 and a second secondary light beam L2; and the light sensor is used to detect the first secondary light beam L1 and second secondary light beam L2 which shine onto air.

Because the light beam emitted by the light source can be split into at least two secondary light beams by the light splitting component, the two secondary light beams can shine onto different positions in air, so as to detect particulates at different positions in air, thus reducing the cost of detection. In the above embodiment, the different positions in air may be different positions in stationary air, or different positions in an airflow, or different positions in multiple flowing airflows.

In another embodiment, the particulate sensor 900 further comprises an airflow channel, which is configured to allow air to flow through to form an airflow; and the light sensor is used to detect the first secondary light beam L1 and second secondary light beam L2 which shine onto the airflow. In this embodiment, the different positions in air are different positions in the airflow.

There may be one airflow channel or multiple airflow channels. When there is one airflow channel (not shown in the figures), one airflow is formed. The first secondary light beam L1 and second secondary light beam L2 can shine onto two positions, one preceding the other, on a flow path of the airflow, to detect particulates at these two positions.

In an embodiment in which there are multiple airflow channels, as shown in Figs. 4, 5 and 7, the airflow channels at least comprise a first airflow channel 21a and a second airflow channel 22a; the first airflow channel 21a is configured to allow air to pass through to form a first airflow A; the second airflow channel 22a is configured to allow air to pass through to form a second airflow B; and the light sensor is used to detect the first secondary light beam L1 and the second secondary light beam L2 which shine onto the first airflow A and the second airflow B respectively.

There may be one light sensor or multiple light sensors. When there is one light sensor (not shown in the figures), the light sensor may be configured to be movable, so as to detect the first secondary light beam L1 and the second secondary light beam L2 in sequence.

In an embodiment in which there are multiple light sensors, as shown in Figs. 4, 5 and 7, the light sensors at least comprise a first light sensor 4 and a second light sensor 5; the first light sensor 4 is used to detect the first secondary light beam L1 shining onto the first airflow A, and the second light sensor 5 is used to detect the second secondary light beam L2 shining onto the second airflow B.

Due to structural limitations, a conventional particulate sensor can only detect particulates in one airflow at the same moment; for particulates in multiple airflows, e.g. a fresh air airflow and an internal circulating airflow in a motor vehicle air conditioning system, multiple particulate sensors are generally needed to perform detection separately, and this increases the cost of detection.

In order to detect the particle size and concentration of particulates in the airflow, a particulate sensor 900 is provided in embodiments of the present invention. As shown in Figs. 1, 2, 3, 4, 5 and 6, in one embodiment, the particulate sensor 900 comprises a housing 8, a mounting plate 7, a duct member 2, a fan 6, the light source 1, the light splitting component 3, the first light sensor 4 and the second sensor 5, wherein the mounting plate 7, duct member 2, fan 6, light source 1, light splitting component 3, first light sensor 4 and second sensor 5 are connected to form a single body, forming an internal structure mounted inside the housing 8; this internal structure is shown in Figs. 4, 5 and 6.

Referring to Figs. 1, 2, 3, 9 and 10, the housing 8 comprises a top cover 81, an encircling sidewall 82 and a bottom cover 83; a first air inlet 82a and a second air inlet 82b are provided at two sides of the encircling sidewall 82 respectively, and an air outlet 83a is provided in the bottom cover 83, wherein the top cover 81 and the bottom cover 83 are disposed at two sides in the axial direction of the encircling sidewall 82 respectively, and, together with the encircling sidewall 82, define a space for accommodating the mounting plate 7, duct member 2, fan 6, light source 1, light splitting component 3, first light sensor 4 and second sensor 5. This space is in communication with the outside via the first air inlet 82a, the second air inlet 82b and the air outlet 83a.

In addition to the above embodiment, the structure of the housing 8 may also have other forms of implementation; it is not limited to being enclosed by the top cover 81, the encircling sidewall 82 and the bottom cover 83. Other changes are also possible to the numbers and positions of the first air inlet 82a, the second air inlet 82b and the air outlet 83a. In one particular embodiment, the top cover 81, the encircling sidewall 82 and the bottom cover 83 may be made of plastic.

Referring to Figs. 4, 5 and 6, the duct member 2, light source 1, light splitting component 3, first light sensor 4 and second light sensor 5 are each fixed to the mounting plate 7, and located on one side of the mounting plate 7; the fan 6 is fixed to the mounting plate 7, and located on the other side of the mounting plate 7. This arrangement makes the structure of the particulate sensor 900 more compact.

In one embodiment, surrounding edges of the mounting plate 7 are connected to an inner wall of the encircling sidewall 82, so as to fix the mounting plate 7 in place, while also fixing the fan 6, duct member 2, light source 1, light splitting component 3, first light sensor 4 and second light sensor 5 in the interior of the housing 8.

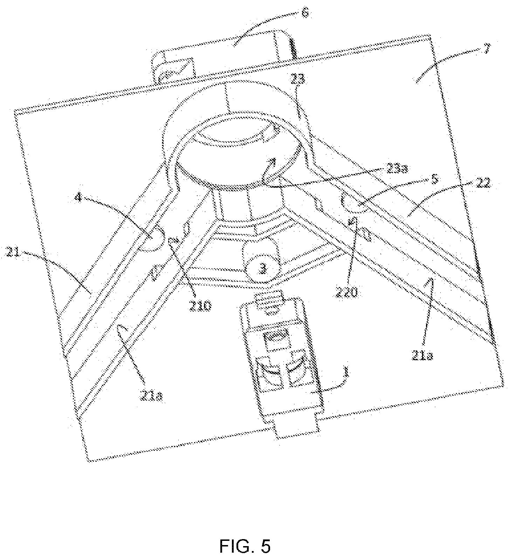

As shown in Figs. 4 and 5, in one embodiment, the duct member 2 has a first tributary part 21, a confluence part 23 and a second tributary part 22, the confluence part 23 being connected separately to the first tributary part 21 and the second tributary part 22, wherein the first tributary part 21 defines the first airflow channel 21a, the second tributary part 22 defines the second airflow channel 22a, and the confluence part 23 has a confluence cavity 23a; the confluence cavity 23a is in communication separately with the first airflow channel 21a and the second airflow channel 22a. The confluence cavity 23a is used to bring together the first airflow A in the first airflow channel 21a and the second airflow B in the second airflow channel 22a. The first air inlet 82a allows the first airflow A to pass through to enter the first airflow channel 21a, the second air inlet 82b allows the second airflow B to pass through to enter the second airflow channel 22a, and the air outlet 83a allows the airflows brought together by the confluence cavity 23a to pass through to flow out of the housing 8.

In the above embodiment, the first airflow A and second airflow B may be a fresh air airflow and an internal circulating airflow in a motor vehicle air conditioning system respectively, or may be two tributaries of the same airflow, wherein the first airflow A contains first particulates a, and the second airflow B contains second particulates b. In different embodiments, the particle size and concentration of the first particulates a may be the same as, or different from, the particle size and concentration of the second particulates b.

In an embodiment which is not shown, the number of tributary parts which the duct member 2 has may be more than two, and correspondingly, the number of airflow channels may also be more than two. In an embodiment which is not shown, the shape of the tributary part is a tube shape closed in the circumferential direction, e.g. may be a round tube or a square tube, with an inner wall of the tube defining the airflow channel. In the embodiments shown in Figs. 5, 6, 7 and 8, the tributary part comprises two parallel plates arranged opposite each other, and the airflow channel is defined between the two plates.

In one particular embodiment, the first tributary part 21, confluence part 23 and second tributary part 22 may be integrally formed, and made of plastic. More specifically, the first airflow channel 21a and second airflow channel 22a are ducts in the shape of straight strips, and the confluence cavity 23a is a cylindrical cavity; the first airflow channel 21a and second airflow channel 22a are arranged at an angle to each other, and disposed symmetrically with respect to a diameter of a cross section of the confluence cavity 23a.

Continuing to refer to Fig. 4, the fan 6 is used to suck gas from inside the confluence cavity 23a, in order to produce negative pressure in the confluence cavity 23a, so that the first airflow A in the first airflow channel 21a and the second airflow B in the second airflow channel 22a flow toward the confluence cavity 23a and come together in the confluence cavity 23a.

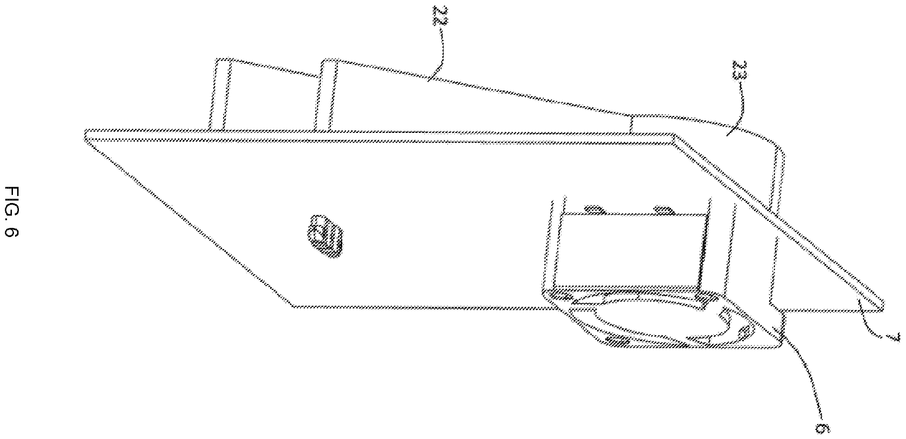

In a more specific embodiment, as shown in Figs. 6, 7 and 8, the mounting plate 7 has a through-hole 7a, and the confluence part 23 covers the through-hole 7a, so that the confluence cavity 23a is in communication with the through-hole 7a; the through-hole 7a allows gas in the confluence cavity 23a to pass through to enter the fan 6, and pass through the air outlet 83a after being discharged from the fan 6, so as to be discharged from the housing 8. Specifically, the mounting plate 7 may be a PCB.

Continuing to refer to Fig. 4, during operation of the particulate sensor 900, the fan 6 runs to produce negative pressure in the confluence cavity 23a, so that the first airflow A is sucked into the first airflow channel 21a through the first air inlet 82a and finally flows into the confluence cavity 23a, and the second airflow B is sucked into the second airflow channel 22a through the second air inlet 82b and finally flows into the confluence cavity 23a.

The light source 1 emits the light beam L, which light beam L shines onto the light splitting component 3, and is at least split into the first secondary light beam L1 and the second secondary light beam L2 by the light splitting component 3, wherein the first secondary light beam L1 is used to shine onto the first particulates a in the first airflow A, and the second secondary light beam L2 is used to shine onto the second particulates b in the second airflow B.

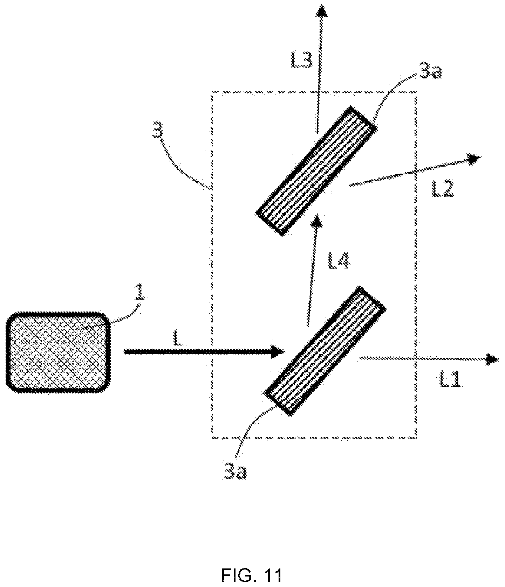

The light splitting component 3 may take a variety of forms, and have a variety of structures. The light splitting component 3 may comprise one or more beam splitter 3a. The beam splitter is a transparent optical element which splits a laser light beam into transmitted light and reflected light. Fig. 11 shows an embodiment in which there are two beam splitters 3a. In this embodiment, the beam splitter 3a close to the light source 1 splits the light beam L into the first secondary light beam L1 and a fourth secondary light beam L4; the fourth secondary light beam L4 shines toward the beam splitter 3a that is located further from the light source 1, and is split into the second secondary light beam L2 and a third secondary light beam L3 by the beam splitter 3a that is located further from the light source 1, wherein the first secondary light beam L1 and the second secondary light beam L2 are used to detect particulates. In this embodiment, the first secondary light beam L1 is transmitted light, the fourth secondary light beam L4 is reflected light, the second secondary light beam L2 is reflected light, and the third secondary light beam L3 is transmitted light.

In an embodiment which is not shown, the light splitting component 3 comprises one beam splitter 3a; this beam splitter 3 splits the light beam L into the first secondary light beam L1 and the second secondary light beam L2, wherein the first secondary light beam L1 and second secondary light beam L2 may be equal quantities of light, or non-equal quantities of light. In this embodiment, one beam of the first secondary light beam L1 and second secondary light beam L2 is reflected light, the other beam being transmitted light.

A flat-plate or cubic light splitting product of SIGMA KOKI may be used for the beam splitter 3a.

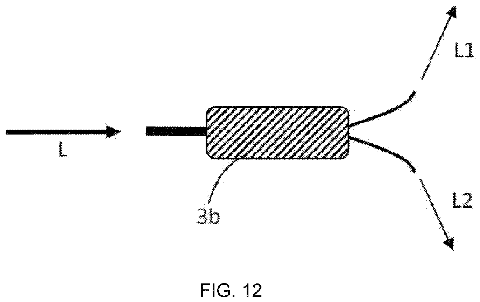

As shown in Fig. 12, in another embodiment, the light splitting component 3 comprises a fibre optic beam splitter 3b. The fibre optic beam splitter 3b comprises a main path and multiple sub-paths formed of optic fibres; the light beam L shines into the main path, and then shines out through the multiple sub-paths, thereby at least forming the first secondary light beam L1 and the second secondary light beam L2.

The first light sensor and second light sensor 5 may be a detector that performs analysis by utilizing the scattering action of particulates on light. When light of a particular wavelength shines onto particulates in an airflow, except for a portion which passes through the particulates or is absorbed by the particulates, most of the light will be scattered with the same wavelength in various directions, the intensity of the scattered light being a function of the concentration of the particulates in the airflow and the particle size of the particulates.

In an embodiment of the present invention, the first light sensor 4 is used to detect the first secondary light beam L1 shining onto the first airflow A, in order to generate a first signal corresponding to the first particulates a. Specifically, after shining onto the first particulates a in the first airflow A, the first secondary light beam L1 is scattered to produce scattered light, the intensity of the scattered light being a function of the concentration of the first particulates a in the first airflow A and the particle size of the first particulates a. By detecting the intensity of the scattered light of the first secondary light beam L1, the first light sensor 4 can generate the first signal corresponding to the particle size and concentration of the first particulates a.

In an embodiment of the present invention, the second light sensor 5 is used to detect the second secondary light beam L2 shining onto the second airflow B, in order to generate a second signal corresponding to the second particulates b. Specifically, after shining onto the second particulates b of the second airflow B, the second secondary light beam L2 is scattered to produce scattered light, the intensity of the scattered light being a function of the concentration of the first particulates a in the first airflow A and the particle size of the first particulates a. By detecting the intensity of the scattered light of the second secondary light beam L2, the second light sensor 5 can generate the second signal corresponding to the particle size and concentration of the second particulates *b*.

The first signal and/or the second signal may be an electronic pulse signal. The first signal and second signal may be transmitted to a control module (not shown in the figures) of the particulate sensor 900; the control module may calculate the particle sizes and concentrations of the first particulates a and the second particulates b according to the intensities of the first signal and the second signal respectively, and output the particle sizes and concentrations to a display screen of the center console of the motor vehicle for display. The control module (not shown in the figures) may be mounted on the mounting plate 7.

In a more specific embodiment, the first light sensor 4 is disposed in the first airflow channel 21a, and the second light sensor 5 is disposed in the second airflow channel 22a; this makes the structure of the particulate sensor 900 more compact, avoiding the need to provide additional space to accommodate the first light sensor 4 and second light sensor 5.

More specifically, to enable the secondary light beams to shine into the corresponding airflow channels, the first tributary part 21 has a first opening 210, and the second tributary part 22 has a second opening 220; the first opening 210 allows the first secondary light beam L1 to pass through, and the second opening 220 allows the second secondary light beam L2 to pass through.

Although the present invention has been disclosed above in preferred embodiments, these are not intended to define the present invention. Any person skilled in the art could make possible changes and amendments without departing from the spirit and scope of the present invention. All amendments, equivalent changes and modifications made to the above embodiments on the basis of the technical substance of the present invention without departing from the content of the technical solution of the present invention shall fall within the scope of protection defined by the claims of the present invention.

## Claims

1. A particulate sensor, used for detecting particulates in air and comprising a light source (1), the light source (1) being used to emit a light beam (L), **characterized in that** the particulate sensor (900) further comprises:
a light splitting component (3), for splitting the light beam (L) into at least a first secondary light beam (L1) and a second secondary light beam (L2);
a light sensor, for detecting the first secondary light beam (L1) and the second secondary light beam (L2) shining onto the air.

2. The particulate sensor as claimed in claim 1, **characterized in that** the particulate sensor (900) further comprises an airflow channel, the airflow channel at least comprising a first airflow channel (21a) and a second airflow channel (22a);
the first airflow channel (21a) is configured to allow the air to pass through to form a first airflow (A); the second airflow channel (22a) is configured to allow the air to pass through to form a second airflow (B) ;
the light sensor is used to detect the first secondary light beam (L1) and the second secondary light beam (L2) shining onto the first airflow (A) and the second airflow (B) respectively.

3. The particulate sensor as claimed in claim 2, **characterized in that** the light sensor at least comprises a first light sensor (4) and a second light sensor (5);
the first light sensor (4) is used to detect the first secondary light beam (L1) shining onto the first airflow (A), and the second light sensor (5) is used to detect the second secondary light beam (L2) shining onto the second airflow (B).

4. The particulate sensor as claimed in claim 1, **characterized in that** the light splitting component (3) comprises one or more beam splitter (3a).

5. The particulate sensor as claimed in claim 2, **characterized in that** the particulate sensor (900) further comprises a duct member (2);
the duct member (2) has a first tributary part (21), a confluence part (23) and a second tributary part (22), the confluence part (23) being connected separately to the first tributary part (21) and the second tributary part (22), wherein the first tributary part (21) defines the first airflow channel (21a), the second tributary part (22) defines the second airflow channel (22a), and the confluence part (23) has a confluence cavity (23a); the confluence cavity (23a) is in communication separately with the first airflow channel (21a) and the second airflow channel (22a);
the confluence cavity (23a) is used to bring together the first airflow (A) in the first airflow channel (21a) and the second airflow (B) in the second airflow channel (22a).

6. The particulate sensor as claimed in claim 5, **characterized in that** the particulate sensor (900) further comprises a fan (6), the fan (6) being used to suck gas from inside the confluence cavity (23a), in order to produce negative pressure in the confluence cavity (23a), so that the first airflow (A) and the second airflow (B) flow toward the interior of the confluence cavity (23a) and come together in the confluence cavity (23a) .

7. The particulate sensor as claimed in claim 5, **characterized in that** the first light sensor (4) is disposed in the first airflow channel (21a), and the second light sensor (5) is disposed in the second airflow channel (22a);
the first tributary part (21) has a first opening (210), and the second tributary part (22) has a second opening (220); the first opening (210) allows the first secondary light beam (L1) to pass through, and the second opening (220) allows the second secondary light beam (L2) to pass through.

8. The particulate sensor as claimed in claim 6, **characterized in that** the particulate sensor (900) further comprises a mounting plate (7), the mounting plate (7) having a through-hole (7a);
the duct member (2) is fixed to the mounting plate (7) and located on one side of the mounting plate (7), wherein the confluence cavity (23a) is in communication with the through-hole (7a);
the fan (6) is fixed to the mounting plate (7) and located on the other side of the mounting plate (7), wherein an air inlet of the fan (6) is in communication with the through-hole (7a).

9. The particulate sensor as claimed in claim 8, **characterized in that** the light source (1), the light splitting component (3), the first light sensor (4) and the second light sensor (5) are each fixed to the mounting plate (7), and located on the same side of the mounting plate (7) as the duct member (2).

10. A motor vehicle air conditioning assembly, **characterized by** comprising the particulate sensor (900) as claimed in any one of claims 1 - 9.
